# EUROPEAN PATENT APPLICATION

(11) **EP 4 763 322 A1**
(43) Date of publication of application: **24.06.2026**
(21) Application number: 25188376.5
(22) Date of filing: 09.07.2025
(51) Int. Cl.: B01F 27/13, B01F 27/17, B01F 27/50, B01F 29/25, B01F 29/64, B01F 29/84, B01F 29/85, B01F 31/441, B01F 31/00, B01F 33/82, B01F 27/192, B01F 25/452

(54) **SLURRY MIXER AND SLURRY EXTRUSION DEVICE INCLUDING THE SAME**

(30) Priority: 19.12.2024 KR 20240191405
(71) Applicant: SAMSUNG SDI CO., LTD., Yongin-si, Gyeonggi-do 17084 (KR)
(72) Inventor: AHN, Hye Jin, Suwon-si, Gyeonggi-do 16678 (KR); JANG, Kyeong Ho, Suwon-si, Gyeonggi-do 16678 (KR); HWANG, Ye Yeong, Suwon-si, Gyeonggi-do 16678 (KR); LEE, Han Sol, Suwon-si, Gyeonggi-do 16678 (KR)
(74) Representative: Gulde & Partner

(57) **Abstract**

A slurry mixer (30) and a slurry extrusion device (1) including the same are disclosed. The slurry mixer (30) includes an inner mixer pipe (320) including a mixer inlet (321) through which a slurry is to be introduced, and a mixer outlet (322) through which the slurry is to be discharged, a mesh (330) in the inner mixer pipe (320) and configured to be in contact with the slurry introduced through the mixer inlet (321), a chopper (340) between the mesh part (330) and the mixer outlet (322) and rotatable about a rotary shaft (360) to shear the slurry, and a distributor (350) between the chopper (340) and the mixer outlet (322), rotatable about the rotary shaft (360) in a first rotation direction, and configured to stir the slurry.

## Description

### BACKGROUND

### 1. Field

Aspects of embodiments of the present disclosure relate to a slurry mixer and a slurry extrusion device including the same.

### 2. Description of Related Art

Unlike a primary battery that cannot be charged, a secondary battery is a battery that can be charged or discharged. Low-capacity secondary batteries may be used in portable small electronic devices, such as smartphones, feature phones, laptop computers, digital cameras, and camcorders, and large-capacity secondary batteries are widely used as motor driving power sources and power storage batteries of hybrid vehicles and electric vehicles. A secondary battery includes an electrode assembly including a positive electrode and a negative electrode, a case accommodating the same, and an electrode tab connected to the electrode assembly.

Slurry may be applied to an electrode plate provided in the electrode assembly, and an extrusion device, which may uniformly (uniformly or substantially uniformly) reduce a size of solid slurry, improve fluidity of the slurry, and quickly extrude the slurry, is desirable.

The above information disclosed in this Background section is provided for enhancement of understanding of the background of the present disclosure, and, therefore, it may contain information that does not constitute related (or prior) art.

### SUMMARY

According to the present disclosure, a slurry mixer capable of improving quality of slurry, and a slurry extrusion device including the same are to be provided.

According to the present disclosure, a slurry mixer capable of quickly manufacturing slurry and a slurry extrusion device including the same are to be provided.

The above and other aspects and features of the present disclosure will be described in or will be apparent from the following description of some embodiments of the present disclosure.

According to an aspect of the present disclosure, a slurry mixer includes an inner mixer pipe including a mixer inlet through which a slurry is to be introduced, and a mixer outlet through which the slurry is to be discharged. The slurry mixer includes a mesh in the inner mixer pipe and configured to be in contact with the slurry introduced through the mixer inlet, a chopper between the mesh and the mixer outlet and rotatable about a rotary shaft to shear the slurry, and a distributor between the chopper and the mixer outlet. The distributor is rotatable about the rotary shaft in a first rotation direction, and configured to stir the slurry. Hence, the mesh, the chopper and the distributor contribute differently to the mixing of the slurry, e.g. by meshing, shearing and stirring, such that the slurry quickly becomes more homogeneous.

The following embodiments may be combined as desired.

The mesh may include a mesh net having a plurality of mesh holes. The mesh holes may be configured to let the slurry pass. The slurry may be configured to pass through the mesh holes. The mesh net may be configured to reciprocate parallel to a longitudinal direction of the inner mixer pipe, e.g. to disperse the slurry. This embodiment may have the advantage that due to the reciprocating movement, the slurry is pressed through the mesh holes with varying pressure, improving the homogeneity of the slurry.

The mesh part may further include a vibration generator configured to vibrate the mesh net. This embodiment may have the advantage that fluidity of the slurry is increased, accelerating the flow of the slurry through ne mesh holes.

The chopper may include a first chopper or chopper blade and a second chopper or chopper blade rotatable about the rotary shaft. This embodiment may have the advantage that two choppers or chopper blades can process slurry faster than a single chopper or chopper blade.

The first chopper or chopper blade and the second chopper or chopper blade may be configured to rotate in different directions.. This embodiment may have the advantage that the slurry may be sheared by the first chopper or chopper blade and the second chopper or chopper blade rotating in different directions, such that a particle size of the slurry is decreased and homogeneity is increased.

The first chopper or chopper blade and the second chopper or chopper blade may have a hook shape. For example, the first and second choppers or chopper blades may have curved shapes which increasingly extends in the respective rotation direction away from the rotary shaft. The first and second choppers or chopper blades may have a free end. Towards the free end, a width of the first and second choppers or chopper blades decrease. The free end may be a be a tip and e.g. a sharp tip. The free end may be pointy. At the free end, the width of the first and second choppers or chopper blades may be minimal. This embodiment may have the advantage that the slurry is sheared more efficiently.

The inner mixer pipe may be rotatable in a second rotation direction opposite to the first rotation direction. This embodiment may have the advantage that additional the slurry is hindered from sticking to the inner mixier pipe, further increasing mixing efficiency.

The inner mixer pipe may be configured to reciprocate in a longitudinal direction of the inner mixer pipe. This embodiment may have the advantage that the flow of the slurry through the inner mixer pipe is increased.

The distributor may include a plurality of blades. The plurality of blades may be configured to come in contact with the slurry while rotating about the rotary shaft and stir the slurry. This embodiment may have the advantage that a plurality of blades more efficiently stirs the slurry than a single blade.

The distributor may further include at least one blade connecting portion and for example at least two blade connecting portions connecting the blade and the rotary shaft. The at least one blade connecting portion may connect a portion of the blade that leads in the rotation direction of the blade to the rotary shaft. A further blade connection portion may connect a portion of the blade that trails in the rotation direction of the blade to the rotary shaft, or may connect a portion of the blade that interconnects the leading and the training portions. This embodiment may have the advantage that undesired movements of the blade are avoided.

The blade connecting portion may include a plurality of blade connecting portions. This embodiment may have the advantage that undesired movements of the blade are avoided. The blade may have a spiral shape. This embodiment may have the advantage that stirring the slurry may contribute to the movement of the slurry through the inner mixer pipe.

The blade may comprise two ends, which may be arranged opposite to each other. One of the ends and another one of the ends of the blade may be connected to the rotary shaft and spaced apart from each other in a longitudinal direction of the rotary shaft. This embodiment may have the advantage that undesired movements of the blade are avoided.

The distributor may include a rotation connecting portion connected to the rotary shaft. The rotation connecting portion may be rotatable about the rotary shaft. The distributor may include a first revolution shaft at a side of the rotation connecting portion. The first revolution shaft may be configured to revolve about the rotary shaft. The distributor may include a first revolution stirrer connected to the first revolution shaft. The first revolution stirrer may be configured to stir the slurry. The distributor may include a second revolution shaft at another side of the rotation connecting portion. The second revolution shaft may be configured to revolve about the rotary shaft. The distributor may include a second revolution stirrer connected to the second revolution shaft. The second revolution stirrer may be configured to stir the slurry. This embodiment may have the advantage that the slurry is hit from different directions, further improving the homogeneity of the slurry.

According to another aspect of the present disclosure, a slurry extrusion device includes an upstream extruder including an upstream extrusion pipe, an upstream slurry inlet in the upstream extrusion pipe and through which a slurry is to be introduced, an upstream screw in the upstream extrusion pipe and configured to extrude the slurry, and an upstream slurry outlet in the upstream extrusion pipe and through which the slurry is to be discharged, a downstream extruder including a downstream extrusion pipe, a downstream slurry inlet in the downstream extrusion pipe and through which the slurry is to be introduced, a downstream screw in the downstream extrusion pipe and configured to extrude the slurry, and a downstream slurry outlet in the downstream extrusion pipe and through which the slurry is to be discharged, and a slurry mixer connecting the upstream slurry outlet and the downstream slurry inlet. The slurry mixer includes an inner mixer pipe including a mixer inlet through which the slurry is to be introduced, and a mixer outlet through which the slurry is to be discharged, a mesh in the inner mixer pipe and configured to be in contact with the slurry introduced through the mixer inlet, a chopper between the mesh part and the mixer outlet and rotatable about a rotary shaft to shear the slurry, and a distributor between the chopper and the mixer outlet and rotatable about the rotary shaft in a first rotation direction to stir the slurry. Hence, the mesh, the chopper and the distributor contribute differently to the mixing of the slurry, e.g. by meshing, shearing and stirring, such that the slurry quickly becomes more homogeneous, such that more homogeneous slurry can be extruded faster.

The following embodiments of slurry extrusion device may be combined as desired.

The upstream screw may include a first upstream screw and a second upstream screw configured to transfer the slurry from the upstream slurry inlet to the upstream slurry outlet and knead the slurry. This embodiment may have the advantage that the homogeneity of the slurry is improved while the slurry is being transported.

The downstream screw may include a first downstream screw and a second downstream screw configured to transfer the slurry from the downstream slurry inlet to the downstream slurry outlet and knead the slurry. This embodiment may have the advantage that the homogeneity of the slurry is further improved while the slurry is being transported.

The mesh may include a mesh net having a plurality of mesh holes. The mesh holes may be configured to let the slurry pass. The slurry may be configured to pass through the mesh holes. The mesh net may be configured to reciprocate parallel to a longitudinal direction of the inner mixer pipe, e.g. to disperse the slurry. This embodiment may have the advantage that due to the reciprocating movement, the slurry is pressed through the mesh holes with varying pressure, improving the homogeneity of the slurry.

The chopper may include a first chopper or chopper blade and a second chopper or chopper blade rotatable about the rotary shaft. This embodiment may have the advantage that two choppers or chopper blades can process slurry faster than a single chopper or chopper blade.

The first chopper or chopper blade and the second chopper or chopper blade may be configured to rotate in different directions. This embodiment may have the advantage that the slurry may be sheared by the first chopper or chopper blade and the second chopper or chopper blade rotating in different directions, such that a particle size of the slurry is decreased and homogeneity is increased.

The inner mixer pipe may be rotatable in a second rotation direction opposite to the first rotation direction. This embodiment may have the advantage that additional the slurry is hindered from sticking to the inner mixer pipe, further increasing mixing efficiency.

According to embodiments of the present disclosure, quality of slurry can be improved through a slurry mixer and a slurry extrusion device including the same.

According to embodiments of the present disclosure, slurry can be quickly manufactured through a slurry mixer and a slurry extrusion device including the same.

Although the present disclosure has been described with reference to some embodiments illustrated in the schematic drawings, the description is merely illustrative, and those skilled in the art to which the technology belongs will understand that various modifications may be made.

### BRIEF DESCRIPTION OF THE DRAWINGS

The above and other objects, features, and advantages of the present disclosure will become more apparent to those of ordinary skill in the art by describing some example embodiments thereof in further detail with reference to the accompanying drawings, in which:
FIG. 1 is a schematic perspective view illustrating a slurry extrusion device according to an embodiment of the present disclosure;
FIG. 2 is a schematic cross-sectional view illustrating the slurry extrusion device according to an embodiment of the present disclosure;
FIG. 3 is a schematic view illustrating a slurry mixer according to an embodiment of the present disclosure;
FIG. 4 is a schematic view illustrating a mesh or mesh part of the slurry mixer according to an embodiment of the present disclosure;
FIGS. 5 and 6 are schematic views illustrating that a chopper or chopper part of the slurry mixer rotates according to an embodiment of the present disclosure;
FIG. 7 illustrates a distributor or distribution part of the slurry mixer according to an embodiment of the present disclosure;
FIG. 8 illustrates a distributor or distribution part of the slurry mixer according to another embodiment of the present disclosure; and
FIG. 9 illustrates a distributor or distribution part of the slurry mixer according to another embodiment of the present disclosure.

### DETAILED DESCRIPTION

Herein, some embodiments of the present disclosure will be described, in further detail, with reference to the accompanying drawings.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

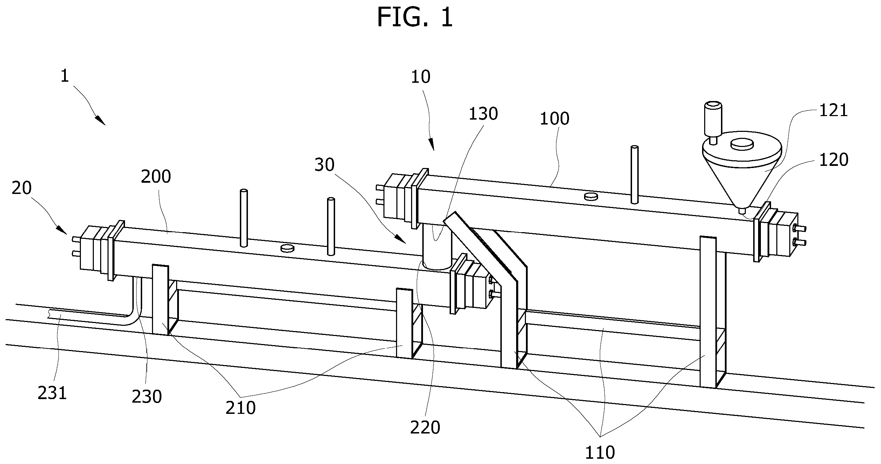

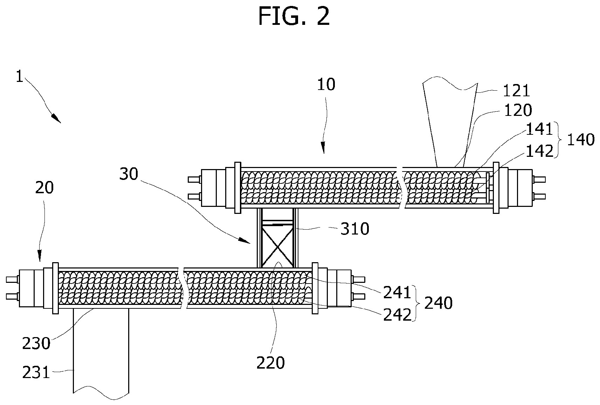

FIG. 1 is a schematic perspective view illustrating a slurry extrusion device according to an embodiment of the present disclosure; and FIG. 2 is a schematic cross-sectional view illustrating the slurry extrusion device according to an embodiment of the present disclosure.

Referring to FIGS. 1 and 2, a slurry extrusion device 1 will be described.

In an embodiment, the slurry extrusion device 1 may include an upstream extruder 10, a downstream extruder 20, and a slurry mixer 30. The slurry extrusion device 1 may pulverize, knead, and mix a solid powder (solid) slurry.

The slurry may be introduced into the upstream extruder 10 and pulverized, kneaded, and mixed by a screw. According to the embodiment, the slurry may be transferred and kneaded by the screw disposed in the upstream extruder 10. The slurry may be moved from the upstream extruder 10 to the slurry mixer 30.

In the slurry mixer 30, the slurry is sheared, and, thus, a particle size thereof may become smaller and more uniform, and the slurry may be homogeneously mixed. A moving speed of the slurry moving from the upstream extruder 10 to the slurry mixer 30 may be reduced in the slurry mixer 30. Accordingly, the moving speed of the slurry in the upstream extruder 10 may be reduced, and a pressure by the slurry in the upstream extruder 10 may be increased. Accordingly, a time, during which the screw of the upstream extruder 10 and the slurry are in contact with each other, may be increased. The time during which the screw and the slurry are in contact with each other is increased, and, thus, kneading ability of the upstream extruder 10 for the slurry may be improved. As the kneading ability of the upstream extruder 10 is improved, shear viscosity and viscoelasticity of the slurry may be reduced, and as the shear viscosity and the viscoelasticity are reduced, the slurry may be easily disposed and quickly dried in a coating and drying process of the slurry in a subsequent process.

The slurry may be moved from the slurry mixer 30 to the downstream extruder 20.

The slurry moved from the slurry mixer 30 to the downstream extruder 20 may be pulverized, kneaded, and mixed by a screw disposed in the downstream extruder 20. According to an embodiment, the slurry may be transferred, kneaded, and diluted by the screw disposed in the downstream extruder 20.

Herein, further detailed configurations of the upstream extruder 10, the downstream extruder 20, and the slurry mixer 30 will be described.

The upstream extruder 10 may include an upstream extrusion pipe 100, an upstream extrusion pipe support part 110, an upstream slurry inlet 120, an upstream slurry outlet 130, and an upstream screw part, or upstream screw, 140.

The upstream extrusion pipe 100 may have a pipe shape. A cross-sectional shape of the upstream extrusion pipe 100 may have any of various shapes, such as a quadrangular shape or a circular shape. However, the cross-sectional shape of the upstream extrusion pipe 100 is not limited to the quadrangular shape and the circular shape and may be provided in any of various shapes.

The upstream extrusion pipe support part 110 may be connected to the upstream extrusion pipe 100 to support the upstream extrusion pipe 100. The upstream extrusion pipe 100 may be supported by the upstream extrusion pipe support part 110 such that a location of the upstream extrusion pipe 100 may be fixed.

The upstream slurry inlet 120 may be disposed in the upstream extrusion pipe 100. The upstream slurry inlet 120 may be formed as an opening in a first side of the upstream extrusion pipe 100. The slurry may be introduced into the upstream extrusion pipe 100 through the upstream slurry inlet 120.

In an embodiment, an upstream slurry hopper 121 may be disposed at the upstream slurry inlet 120. The upstream slurry hopper 121 may have a funnel shape to guide the slurry to move to the upstream slurry inlet 120. However, a shape of the upstream slurry hopper 121 is not limited to the funnel shape and may have any of various shapes.

The upstream slurry outlet 130 may be disposed in the upstream extrusion pipe 100. The upstream slurry outlet 130 may be formed as an opening in a second side of the upstream extrusion pipe 100. The slurry may be discharged from the upstream extrusion pipe 100 through the upstream slurry outlet 130.

The slurry discharged from the upstream extrusion pipe 100 may be moved to the downstream extruder 20 through the slurry mixer 30.

The upstream screw part 140 may be disposed in the upstream extrusion pipe 100 to move the slurry from the first side to the second side. According to an embodiment, the upstream screw part 140 may be disposed inside the upstream extrusion pipe 100 to move the slurry from the upstream slurry inlet 120 to the upstream slurry outlet 130. The upstream screw part 140 may knead the slurry while moving the slurry.

In an embodiment, the upstream screw part 140 may include a first upstream screw 141 and a second upstream screw 142.

The first upstream screw 141 and the second upstream screw 142 may be arranged in parallel. According to the embodiment, the first upstream screw 141 and the second upstream screw 142 may be arranged parallel to a longitudinal direction of the upstream extrusion pipe 100.

The first upstream screw 141 and the second upstream screw 142 may rotate while engaged with each other. As the first upstream screw 141 and the second upstream screw 142 rotate while engaged with each other, the slurry disposed between the first upstream screw 141 and the second upstream screw 142 may be moved or pulverized, and, thus, a particle size of the slurry may be reduced. In an embodiment, the slurry disposed between the first upstream screw 141 and the second upstream screw 142 may be kneaded.

According to an embodiment, the first upstream screw 141 and the second upstream screw 142 may rotate in a same direction. According to another embodiment, the first upstream screw 141 and the second upstream screw 142 may rotate in different directions.

Shapes of and distances between threads formed in the first upstream screw 141 and the second upstream screw 142 may be varied. According to an embodiment, a distance between the threads of the first upstream screw 141 and the second upstream screw 142 arranged adjacent to the upstream slurry inlet 120 may be greater than a distance between the threads at central portions (central portions in a longitudinal direction) of the first upstream screw 141 and the second upstream screw 142. In this way, as the distance between the threads varies according to locations of the first upstream screw 141 and the second upstream screw 142, a function performed on the slurry may change according to the locations of the first upstream screw 141 and the second upstream screw 142.

According to an embodiment, as the distance between the threads of the first upstream screw 141 and the second upstream screw 142 becomes wide in the upstream slurry inlet 120, the slurry may move quickly. As the distance between the threads at the central portions (the central portions in the longitudinal direction) of the first upstream screw 141 and the second upstream screw 142 becomes narrow, the slurry may be kneaded.

The slurry kneaded by the first upstream screw 141 and the second upstream screw 142 may move to the upstream slurry outlet 130.

The slurry discharged from the upstream slurry outlet 130 may pass through the slurry mixer 30 and move to the downstream extruder 20. According to an embodiment, the slurry passing through the slurry mixer 30 may be introduced into a downstream slurry inlet 220 of the downstream extruder 20.

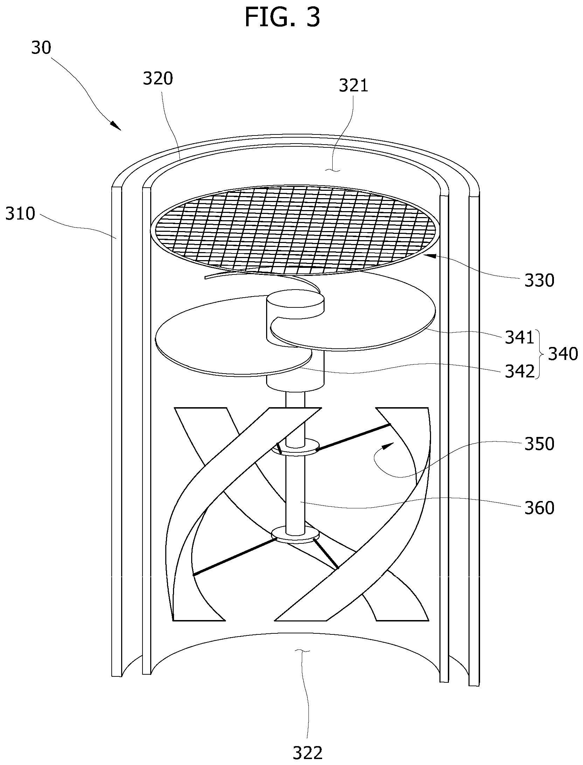

The contents of the slurry mixer 30 will be described below together with a description of FIG. 3.

The downstream extruder 20 may include a downstream extrusion pipe 200, a downstream extrusion pipe support part 210, the downstream slurry inlet 220, a downstream slurry outlet 230, and a downstream screw part, or downstream screw, 240.

The downstream extrusion pipe 200 may have a pipe shape. A cross-sectional shape of the downstream extrusion pipe 200 may have any of various shapes, such as a quadrangular shape or a circular shape. However, the cross-sectional shape of the downstream extrusion pipe 200 is not limited to the quadrangular shape and the circular shape and may have any of various shapes.

The downstream extrusion pipe support part 210 may be connected to the downstream extrusion pipe 200 to support the downstream extrusion pipe 200. The downstream extrusion pipe 200 may be supported by the downstream extrusion pipe support part 210 such that a location of the downstream extrusion pipe 200 may be fixed.

The downstream slurry inlet 220 may be disposed in the downstream extrusion pipe 200. The downstream slurry inlet 220 may be formed as an opening in a first side of the downstream extrusion pipe 200. The slurry may be introduced into the downstream extrusion pipe 200 through the downstream slurry inlet 220.

According to an embodiment, the slurry passing through the upstream extruder 10 and the slurry mixer 30 may be introduced into the downstream slurry inlet 220.

The downstream slurry outlet 230 may be disposed in the downstream extrusion pipe 200. The downstream slurry outlet 230 may be formed as an opening in a second side of the downstream extrusion pipe 200. The slurry may be discharged from the downstream extrusion pipe 200 through the downstream slurry outlet 230.

The downstream screw part 240 may be disposed in the downstream extrusion pipe 200 to move the slurry from the first side to the second side. According to an embodiment, the downstream screw part 240 may be disposed inside the downstream extrusion pipe 200 to move the slurry from the downstream slurry inlet 220 to the downstream slurry outlet 230. The downstream screw part 240 may knead the slurry while moving the slurry.

In an embodiment, the downstream screw part 240 may include a first downstream screw 241 and a second downstream screw 242.

In an embodiment, the first downstream screw 241 and the second downstream screw 242 may be arranged in parallel. According to the embodiment, the first downstream screw 241 and the second downstream screw 242 may be arranged parallel to a longitudinal direction of the downstream extrusion pipe 200.

The first downstream screw 241 and the second downstream screw 242 may rotate while engaged with each other. As the first downstream screw 241 and the second downstream screw 242 rotate while engaged with each other, the slurry disposed between the first downstream screw 241 and the second downstream screw 242 may be moved or pulverized, and, thus, a particle size of the slurry may be reduced. In an embodiment, the slurry disposed between the first downstream screw 241 and the second downstream screw 242 may be kneaded.

According to an embodiment, the first downstream screw 241 and the second downstream screw 242 may rotate in a same direction. According to another embodiment, the first downstream screw 241 and the second downstream screw 242 may rotate in different directions.

Shapes of and distances between threads formed in the first downstream screw 241 and the second downstream screw 242 may be varied. According to an embodiment, a distance between the threads of the first downstream screw 241 and the second downstream screw 242 arranged adjacent to the downstream slurry inlet 220 may be greater than a distance between the threads at central portions (central portions in a longitudinal direction) of the first downstream screw 241 and the second downstream screw 242. In this way, as the distance between the threads varies according to locations of the first downstream screw 241 and the second downstream screw 242, a function performed on the slurry may change according to the locations of the first downstream screw 241 and the second downstream screw 242.

According to an embodiment, as the distance between the threads of the first downstream screw 241 and the second downstream screw 242 becomes wide in the downstream slurry inlet 220, the slurry may move quickly. As the distance between the threads at the central portions (the central portions in the longitudinal direction) of the first downstream screw 241 and the second downstream screw 242 becomes narrow, the slurry may be kneaded.

The slurry kneaded by the first downstream screw 241 and the second downstream screw 242 may move to the downstream slurry outlet 230. The slurry discharged from the downstream slurry outlet 230 may move along a downstream slurry discharge pipe 231 connected to the downstream slurry outlet 230.

FIG. 3 is a schematic view illustrating a slurry mixer according to an embodiment of the present disclosure.

Referring to FIG. 3, the slurry mixer 30 connecting the upstream extruder 10 and the downstream extruder 20 is illustrated.

The slurry mixer 30 may include an outer mixer pipe 310, an inner mixer pipe 320, a mesh part, or mesh, 330, a chopper part, or chopper, 340, a distribution part, or distributor, 350, and a rotary shaft 360.

The outer mixer pipe 310 may connect the upstream extruder 10 and the downstream extruder 20. According to an embodiment, the outer mixer pipe 310 may connect the upstream slurry outlet 130 of the upstream extruder 10 and the downstream slurry inlet 220 of the downstream extruder 20.

The outer mixer pipe 310 may be provided in the form of a pipe. In an embodiment, a cross-sectional shape of the outer mixer pipe 310 may be provided in a circular shape or a quadrangular shape. However, the cross-sectional shape of the outer mixer pipe 310 is not limited to the circular shape and the quadrangular shape and may be provided in any of various shapes.

The inner mixer pipe 320 may be disposed inside the outer mixer pipe 310. The inner mixer pipe 320 may be provided in the form of a pipe. In an embodiment, a cross-sectional shape of the inner mixer pipe 320 may be provided in a circular shape or a quadrangular shape. However, the cross-sectional shape of the inner mixer pipe 320 is not limited to the circular shape and the quadrangular shape and may be provided in any of various shapes.

The inner mixer pipe 320 may be disposed and moved inside the outer mixer pipe 310.

According to the embodiment, the inner mixer pipe 320 may move parallel to a longitudinal direction of the inner mixer pipe 320. In further detail, the inner mixer pipe 320 may reciprocate and vibrate in parallel to the longitudinal direction of the inner mixer pipe 320.

According to an embodiment, the inner mixer pipe 320 may rotate. In an embodiment, the inner mixer pipe 320 may rotate in place.

The inner mixer pipe 320 may include a mixer inlet 321 and a mixer outlet 322.

The mixer inlet 321 may be connected to the upstream slurry outlet 130 of the upstream extrusion pipe 100, and the mixer outlet 322 may be connected to the downstream slurry inlet 220 of the downstream extrusion pipe 200.

The slurry discharged from the upstream slurry outlet 130 of the upstream extrusion pipe 100 may be introduced into the inner mixer pipe 320 through the mixer inlet 321 and may move to the mixer outlet 322 via the mesh part 330, the chopper part 340, and the distribution part 350 arranged inside the inner mixer pipe 320. The slurry moving to the mixer outlet 322 may move to the downstream extrusion pipe 200 through the downstream slurry inlet 220.

The slurry passing through the inner mixer pipe 320 may be sheared and dispersed by the mesh part 330, the chopper part 340, and the distribution part 350. Accordingly, physical properties (e.g., a particle size, fluidity, homogeneity, etc.) of the slurry may be changed.

The mesh part 330 may be disposed between the mixer inlet 321 and the mixer outlet 322. The mesh part 330 may uniformize or substantially uniformize particle sizes of the slurry while in contact with the slurry. According to an embodiment, the mesh part 330 may be provided in the form of a sieve or a net to reduce a size of the slurry. In an embodiment, the mesh part 330 may reduce the particle size of the slurry to a size smaller than or equal to a size of the sieve or the net.

The chopper part 340 may be disposed between the mixer inlet 321 and the mixer outlet 322. According to an embodiment, the chopper part 340 may be disposed between the mesh part 330 and the mixer outlet 322. The chopper part 340 may rotate about the rotary shaft 360. The chopper part 340 may come into contact with the slurry while rotating about the rotary shaft 360. The chopper part 340 may shear the slurry while in contact with the slurry. As the slurry is sheared, the particle size of the slurry may be further decreased, and particles of the slurry may become finer.

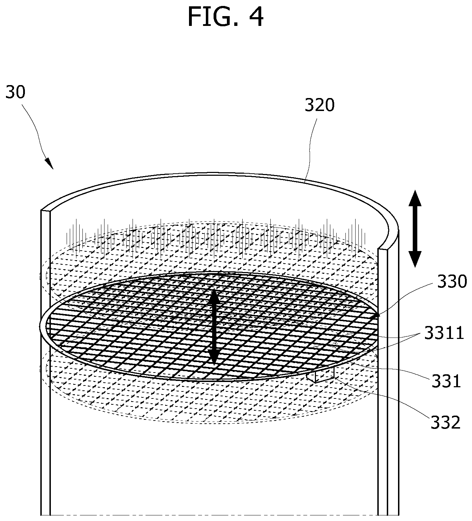

The distribution part 350 may be disposed between the mixer inlet 321 and the mixer outlet 322. According to an embodiment, the distribution part 350 may be disposed between the chopper part 340 and the mixer outlet 322. The distribution part 350 may rotate about the rotary shaft 360. While in contact with the slurry, the distribution part 350 may make the slurry homogeneous and increase fluidity of the slurry. A change in physical properties of the slurry by the slurry mixer 30 will be described with reference to FIGS. 4 to 9.

FIG. 4 is a schematic view illustrating a mesh part of the slurry mixer according to an embodiment of the present disclosure.

The mesh part 330 may be disposed inside the inner mixer pipe 320. In an embodiment, the mesh part 330 may include a mesh net 331 and a vibration generating unit, or vibration generator, 332.

The mesh net 331 may be provided in the form of a grid. As the mesh net 331 is provided in the form of a grid, a mesh hole 3311 may be provided in the mesh net 331. In an embodiment, a shape of the mesh hole 3311 may be provided in a circular shape, a quadrangular shape, or a triangular shape. However, the shape of the mesh hole 3311 is not limited to a circular shape, a quadrangular shape, or a triangular shape and may be provided in any of various shapes.

In an embodiment, a fine pattern may be formed on a surface of the mesh net 331. As the fine pattern is formed on the surface of the mesh net 331, a phenomenon in which the slurry slips in the mesh net may be minimized or reduced. In an embodiment, the fine pattern may be formed in an embossed shape or an engraved shape.

As the mesh part 330 is disposed inside the slurry mixer 30, the mesh part 330 may reduce a moving speed of the slurry due to the contact with the slurry, and, accordingly, resistance may occur in the movement of the slurry. As the resistance occurs in the movement of the slurry, a pressure by the slurry in the upstream extruder 10 before the slurry is introduced into the slurry mixer 30 may increase. As the pressure by the slurry is generated in the upstream extruder 10, a time, during which the slurry stays in the upstream extruder 10, may increase, a time, during which the slurry and the upstream screw part 140 are in contact with each other, may increase, and, thus, a time, during which the slurry is kneaded, may increase. Accordingly, the kneading ability of the upstream extruder 10 for the slurry may be improved.

In an embodiment, an exterior of the mesh hole 3311 may be provided to be sharp, like a blade. As the exterior of the mesh hole 3311 is sharply provided, the slurry in contact with the exterior of the mesh hole 3311 may be cut. As the slurry is sheared due to contact with the exterior of the mesh hole 3311, a particle size of the slurry may decrease.

As the slurry having a particle size smaller than a size of the mesh hole 3311 passes through the mesh part 330, the particle sizes of the slurry may be uniformized or substantially uniformized.

The mesh part 330 may move inside the inner mixer pipe 320. According to an embodiment, the mesh part 330 may reciprocate parallel to the longitudinal direction of the inner mixer pipe 320. Accordingly, a number of times of contact between the mesh net 331 and the slurry may be increased, and the amount of an impact on the slurry may be increased.

The inner mixer pipe 320 may move in a direction opposite to the movement of the mesh part 330. According to an embodiment, if the mesh part 330 is raised, the inner mixer pipe 320 may be lowered, and if the mesh part 330 is lowered, the inner mixer pipe 320 may be raised. Accordingly, stagnation of the slurry may be prevented or substantially prevented, and agglomeration of the slurry may be prevented or substantially prevented.

The vibration generating unit 332 may be connected to the mesh net 331 to generate vibration in the mesh net 331. According to an embodiment, the vibration generating unit 332 may vibrate the mesh net 331 with a frequency in an ultrasonic range. As the vibration generating unit 332 vibrates the mesh net 331, a number of times of contact between the mesh net 331 and the slurry may be further increased.

Through this configuration, the particle sizes of the slurry may be further uniformized. Further, through this configuration, the fluidity of the slurry may be increased.

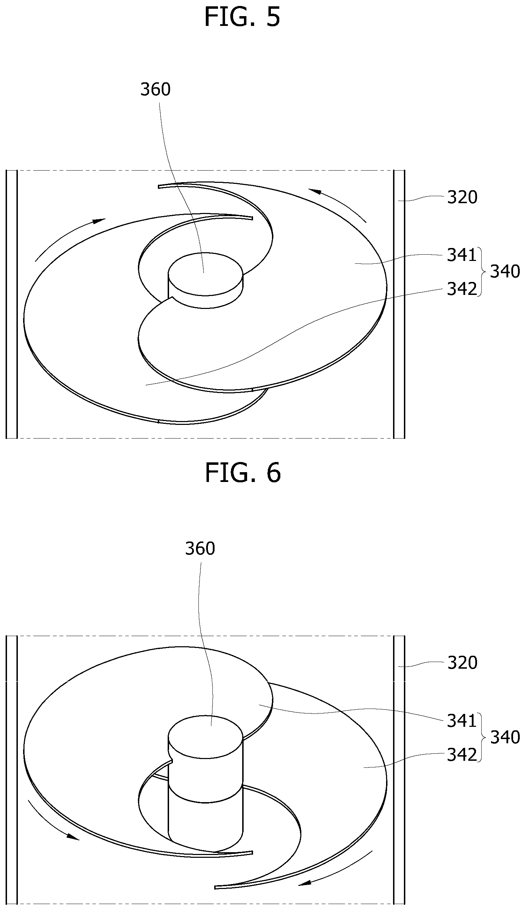

FIGS. 5 and 6 are schematic views illustrating that a chopper or chopper part of the slurry mixer rotates according to an embodiment of the present disclosure.

The chopper part 340 may be disposed inside the inner mixer pipe 320 and come into contact with the slurry while rotating. The rotating chopper part 340 may shear, or cut, the slurry. The chopper part 340 may include at least one chopper or chopper blade. According to an embodiment, the chopper part 340 may include a first chopper or chopper blade 341 and a second chopper or chopper blade 342. However, the chopper 340 is not limited to including two choppers or chopper blades and may include one or more choppers or chopper blades to shear the slurry.

With respect to a moving direction of the slurry, the chopper part 340 may be disposed downstream of the mesh part 330.

The first chopper or chopper blade 341 and the second chopper or chopper blade 342 may shear the slurry while rotating. According to an embodiment, the first chopper or chopper blade 341 and the second chopper or chopper blade 342 may rotate in a same direction or in different directions.

The first chopper or chopper blade 341 and the second chopper or chopper blade 342 may rotate about the rotary shaft 360. According to an embodiment, the first chopper or chopper blade 341 and the second chopper or chopper blade 342 may be connected to the rotary shaft 360 to rotate. In an embodiment, shapes of the first chopper or chopper blade 341 and the second chopper or chopper blade 342 may be provided in a hook shape. However, the shapes of the first chopper or chopper blade 341 and the second chopper or chopper blade 342 are not limited to the hook shape, and may be provided in any of various suitable shapes.

As the first chopper or chopper blade 341 and the second chopper or chopper blade 342 rotate in different directions, the first chopper or chopper blade 341 and the second chopper or chopper blade 342 may cross each other. According to an embodiment, the first chopper or chopper blade 341 and the second chopper or chopper blade 342 may be operated like scissors or scissor blades to shear the slurry. Accordingly, the particle size of the slurry may be reduced. FIG. 5 illustrates that the first chopper or chopper blade 341 and the second chopper or chopper blade 342 cross each other at a first position; and FIG. 6 illustrates that the first chopper or chopper blade 341 and the second chopper or chopper blade 342 cross each other at a second position.

When a state in which the first chopper or chopper blade 341 and the second chopper or chopper blade 342 cross each other is defined as crossing, the slurry disposed between the first chopper or chopper blade 341 and the second chopper or chopper blade 342 during the crossing may be better sheared. As the first chopper or chopper blade 341 and the second chopper or chopper blade 342 rotate in different directions, a number of times of the crossing per minute may increase. Accordingly, a cutting rate of the slurry may be improved.

As the slurry is sheared by the chopper part 340, the slurry may be further atomized.

A distance between the first chopper or chopper blade 341 and the second chopper or chopper blade 342 may be adjusted. The distance between the first chopper or chopper blade 341 and the second chopper or chopper blade 342 may be adjusted according to physical properties (particle size, etc.) of the slurry. The distance may extend along the rotary shaft.

Fine patterns may be formed on surfaces of the first chopper or chopper blade 341 and the second chopper or chopper blade 342. As the fine patterns are formed on the surfaces of the first chopper or chopper blade 341 and the second chopper or chopper blade 342, a phenomenon in which the slurry slips in the first chopper or chopper blade 341 and the second chopper or chopper blade 342 may be minimized or reduced. In an embodiment, the fine pattern may be formed in an embossed shape or an engraved shape.

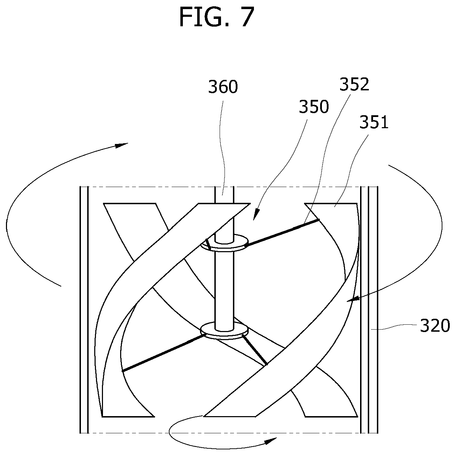

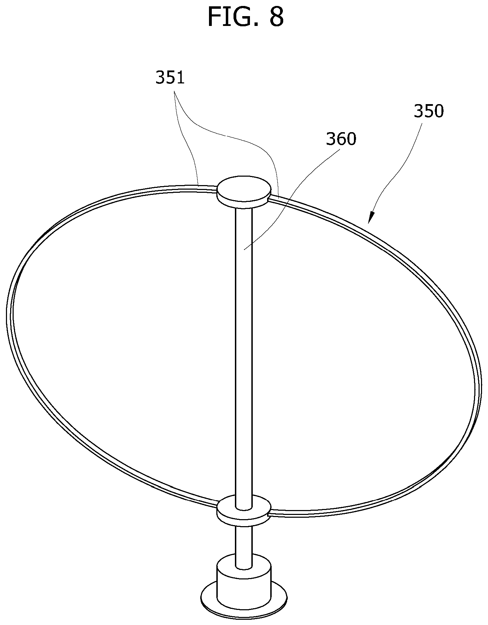

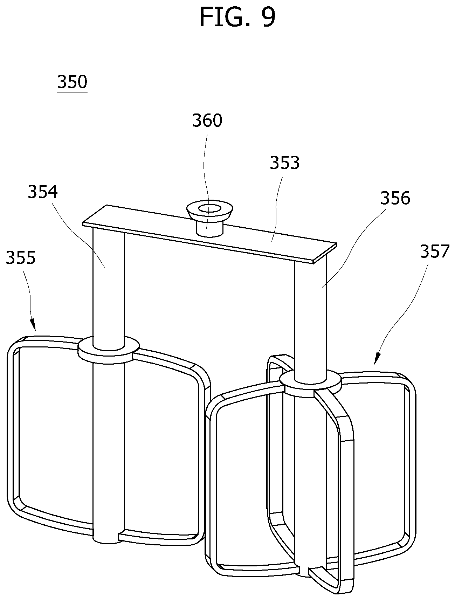

FIG. 7 illustrates a distribution part of the slurry mixer according to an embodiment of the present disclosure; FIG. 8 illustrates a distributor, which may be designated as distribution part, of the slurry mixer according to another embodiment of the present disclosure; and FIG. 9 illustrates a distribution part of the slurry mixer according to another embodiment of the present disclosure.

The distribution part 350 will be described with reference to FIGS. 7 to 9.

The distribution part 350 may be disposed inside the inner mixer pipe 320. According to an embodiment, the distribution part 350 may be disposed between the mixer inlet 321 and the mixer outlet 322. In further detail, the distribution part 350 may be disposed between the chopper part 340 and the mixer outlet 322. With respect to the moving direction of the slurry, the distribution part 350 may be disposed downstream of the chopper part 340.

The distribution part 350 may rotate about the rotary shaft 360 in the inner mixer pipe 320 to move the slurry. According to an embodiment, the distribution part 350 may promote the slurry sheared by the chopper part 340 to move to the mixer outlet 322 of the inner mixer pipe 320. The distribution part 350 may promote the movement of the slurry while rotating and may improve the fluidity of the slurry. Further, the distribution part 350 may increase homogeneity of particles of the slurry.

According to an embodiment, the distribution part 350 may rotate in a first rotation direction. The inner mixer pipe 320 may rotate in a second rotation direction opposite to the first rotation direction. In this way, as the distribution part 350 and the inner mixer pipe 320 rotate in different directions, a shear force applied to the slurry may be improved. Further, fluidity and dispersibility of the slurry may be improved.

According to another embodiment, the inner mixer pipe 320 may rotate in the first rotation direction.

The distribution part 350 according to an embodiment will be described with reference to FIG. 7.

The distribution part 350 may include a blade 351 and a blade connecting portion 352. The blade 351 may come into contact with the slurry while rotating about the rotary shaft 360. Accordingly, the movement of the slurry to the mixer outlet 322 may be promoted. Further, the slurry may be evenly kneaded, and the homogeneity of particles of the slurry may be improved.

The distribution part 350 may include at least one blade 351. In an embodiment, a shape of the blade 351 may be provided in a spiral shape.

The blade connecting portion 352 may connect the rotary shaft 360 and the blade 351. The blade connecting portion 352 may support the blade 351 while rotating about the rotary shaft 360. The blade 351 and the blade connecting portion 352 may be provided as separate components and connected to each other or may be provided in an integral component.

The distribution part 350 according to another embodiment will be described with reference to FIG. 8.

The distribution part 350 may include the blade 351 connected to the rotary shaft 360. In an embodiment, the blade 351 may be provided as a plurality of blades 351. A first end and a second end of the blade 351 may be connected to the rotary shaft 360.

According to an embodiment, the first end and the second end of the blade 351 connected to the rotary shaft 360 may be spaced apart from each other in a longitudinal direction of the rotary shaft 360.

According to another embodiment, the first end and the second end of the blade 351 connected to the rotary shaft 360 may be connected to each other.

The distribution part 350 according to another embodiment will be described with reference to FIG. 9.

The distribution part 350 may include a rotation connecting portion 353, a first revolution shaft 354, a first revolution stirrer 355, a second revolution shaft 356, and a second revolution stirrer 357.

The rotation connecting portion 353 may be connected to the rotary shaft 360 to rotate about the rotary shaft 360. According to an embodiment, the rotation connecting portion 353 may rotate about the rotary shaft 360 in place.

The first revolution shaft 354 and the second revolution shaft 356 may be arranged to be connected to the rotation connecting portion 353. The first revolution shaft 354 and the second revolution shaft 356 may be disposed to be spaced apart from each other. According to an embodiment, the first revolution shaft 354 may be disposed at an end of the rotation connecting portion 353, and the second revolution shaft 356 may be disposed at another end of the rotation connecting portion 353. The first revolution shaft 354 and the second revolution shaft 356 may rotate by the rotation connecting portion 353 that rotates and may revolve about the rotary shaft 360.

The first revolution stirrer 355 may rotate about the first revolution shaft 354, and the second revolution stirrer 357 may rotate about the second revolution shaft 356. The first revolution stirrer 355 and the second revolution stirrer 357 may rotate while revolving about the rotary shaft 360.

However, shapes of the first revolution stirrer 355 and the second revolution stirrer 357 are not limited to shapes illustrated in FIG. 9 and may be provided in any of various shapes. According to an embodiment, the first revolution stirrer 355 and the second revolution stirrer 357 may be provided in shapes illustrated in FIGS. 7 and 8 or may be provided in the shape of a screw, for example.

However, the distribution part 350 is not limited to the embodiments illustrated in FIGS. 7 to 9 and may be provided in any of various shapes. According to an embodiment, a shape of the distribution part 350 may be provided in a shape of a screw.

According to embodiments of the present disclosure, quality of slurry can be improved through a slurry mixer and a slurry extrusion device including the same.

According to embodiments of the present disclosure, slurry can be quickly manufactured through a slurry mixer and a slurry extrusion device including the same.

Although the present disclosure has been described with reference to some embodiments illustrated in the drawings, the description is merely illustrative, and those skilled in the art to which the technology belongs will understand that various modifications may be made.

Therefore, the technical scope of the present disclosure should be defined by the claims.

## Claims

1. A slurry mixer (30) comprising:
an inner mixer pipe (320) comprising a mixer inlet (321) through which a slurry is to be introduced, and a mixer outlet (322) through which the slurry is to be discharged;
a mesh (330) in the inner mixer pipe (320) and configured to be in contact with the slurry introduced through the mixer inlet (321);
a chopper (340) between the mesh (330) and the mixer outlet (322) and rotatable about a rotary shaft (360) to shear the slurry; and
a distributor (350) between the chopper (340) and the mixer outlet (322), rotatable about the rotary shaft (360) in a first rotation direction, and configured to stir the slurry.

2. The slurry mixer (30) as claimed in claim 1, wherein the mesh (330) comprises a mesh net (331) having a plurality of mesh holes (3311) configures to let pass the slurry, and configured to reciprocate parallel to a longitudinal direction of the inner mixer pipe (320).

3. The slurry mixer (30) as claimed in claim 2, wherein the mesh (330) further comprises a vibration generator (332) configured to vibrate the mesh net (331).

4. The slurry mixer (30) as claimed in any of claims 1 to 3, wherein the chopper (340) comprises a first chopper (341) and a second chopper (342) rotatable about the rotary shaft (360).

5. The slurry mixer (30) as claimed in claim 4, wherein the first chopper (341) and the second chopper (342) are configured to rotate in different directions.

6. The slurry mixer (30) as claimed in claim 4 or 5, wherein the first chopper (341) and the second chopper (342) have a hook shape.

7. The slurry mixer (30) as claimed in any of claims 1 to 6, wherein the inner mixer pipe (320) is rotatable in a second rotation direction opposite to the first rotation direction.

8. The slurry mixer (30) as claimed in any of claims 1 to 7, wherein the inner mixer pipe (320) is configured to reciprocate in a longitudinal direction of the inner mixer pipe (320).

9. The slurry mixer (30) as claimed in any of claims 1 to 8, wherein the distributor (350) comprises a plurality of blades (351) configured to come in contact with the slurry while rotating about the rotary shaft (360) and stir the slurry.

10. The slurry mixer (30) as claimed in claim 9, wherein the distributor (350) further comprises a blade connecting portion (352) connecting the blade (351) and the rotary shaft (360).

11. The slurry mixer (30) as claimed in claim 10, wherein the blade connecting portion (352) comprises a plurality of blade connecting portions (352), and the blade (351) has a spiral shape.

12. The slurry mixer (30) as claimed in any of claims 9 to 11, wherein the blade (351) comprises two ends that are connected to the rotary shaft (360) and are spaced apart from each other in a longitudinal direction of the rotary shaft (360).

13. The slurry mixer (30) as claimed in any of claims 1 to 12, wherein the distributor (350) comprises:
a rotation connecting portion (353) connected to the rotary shaft (360) and rotatable about the rotary shaft (360);
a first revolution shaft (354) at a side of the rotation connecting portion (353) and configured to revolve about the rotary shaft (360);
a first revolution stirrer (355) connected to the first revolution shaft (354) and configured to stir the slurry;
a second revolution shaft (356) at another side of the rotation connecting portion (353) and configured to revolve about the rotary shaft (360); and
a second revolution stirrer (357) connected to the second revolution shaft (356) and configured to stir the slurry.

14. A slurry extrusion device (1) comprising:
an upstream extruder (10) comprising an upstream extrusion pipe (100), an upstream slurry inlet (120) in the upstream extrusion pipe (100) and through which a slurry is to be introduced, an upstream screw (140) in the upstream extrusion pipe (100) and configured to extrude the slurry, and an upstream slurry outlet (130) in the upstream extrusion pipe (100) and through which the slurry is to be discharged;
a downstream extruder (20) comprising a downstream extrusion pipe (200), a downstream slurry inlet (220) in the downstream extrusion pipe (200) and through which the slurry is to be introduced, a downstream screw (240) in the downstream extrusion pipe (200) and configured to extrude the slurry, and a downstream slurry outlet (230) in the downstream extrusion pipe (200) and through which the slurry is to be discharged; and
a slurry mixer (30) connecting the upstream slurry outlet (130) and the downstream slurry inlet (220),
wherein the slurry mixer (30) is the slurry mixer (30) of any of the previous claims.

15. The slurry extrusion device (1) as claimed in claim 14, wherein the upstream screw (140) comprises a first upstream screw (141) and a second upstream screw (142) configured to transfer the slurry from the upstream slurry inlet (120) to the upstream slurry outlet (130) and knead the slurry.
